# EUROPEAN PATENT SPECIFICATION

(11) **EP 4 002 737 B1**
(45) Date of publication and mention of the grant of the patent: **31.07.2024**
(21) Application number: 20854368.6
(22) Date of filing: 10.06.2020
(51) Int. Cl.: H04L 1/00, H04L 1/1607, H04L 1/1829, H04L 1/1867, H04W 76/15, H04W 84/18

(54) **ELECTRONIC DEVICE FOR TRANSMITTING DATA PACKETS IN BLUETOOTH NETWORK ENVIRONMENT AND METHOD THEREFOR**
ELEKTRONISCHE VORRICHTUNG ZUR ÜBERTRAGUNG VON DATENPAKETEN IN EINER BLUETOOTH-NETZWERKUMGEBUNG UND VERFAHREN DAFÜR
DISPOSITIF ÉLECTRONIQUE POUR LA TRANSMISSION DE PAQUETS DE DONNÉES DANS UN ENVIRONNEMENT DE RÉSEAU BLUETOOTH ET PROCÉDÉ ASSOCIÉ

(30) Priority: 16.08.2019 KR 20190100432
(43) Date of publication of application: 25.05.2022
(73) Proprietor: Samsung Electronics Co., Ltd., Gyeonggi-do, 16677 (KR)
(72) Inventor: CHEONG, Gupil, Suwon-si, Gyeonggi-do 16677 (KR); NA, Doosu, Suwon-si, Gyeonggi-do 16677 (KR); BAE, Yunsik, Suwon-si, Gyeonggi-do 16677 (KR); KANG, Doosuk, Suwon-si, Gyeonggi-do 16677 (KR); CHOI, Bokun, Suwon-si, Gyeonggi-do 16677 (KR)
(74) Representative: Gulde & Partner
(86) International application number: PCT/KR2020/007531
(87) International publication number: WO 2021/033893

(56) References cited:
- EP-A1- 2 051 454
- EP-A1- 2 947 899
- KR-A- 20030 006 246
- KR-A- 20140 135 569
- KR-B1- 101 574 767
- US-A1- 2012 058 727
- US-A1- 2016 360 526
- US-A1- 2018 084 456
- US-A1- 2019 246 221

## Description

### Technical Field

Various embodiments disclosed in the disclosure relates to technologies for transmitting data packets in a Bluetooth network environment.

### Background Art

The Bluetooth standard technology defined by the Bluetooth special interest group (SIG) defines a protocol for short-range wireless communication between electronic devices. In a Bluetooth network environment, electronic devices may transmit or receive data packets, including content such as texts, voices, images, or videos, in a specified frequency band (e.g., about 2. 4 gigahertz (GHz)).

For example, user equipment (UE), such as a smartphone, a tablet, a desktop computer, or a laptop computer, may transmit data packets to another UE or an accessory device. The accessory device may include at least one of, for example, an earphone, a headset, a smart watch, a speaker, a mouse, a keyboard, or a display device.

Document (EP 2 947 899 A1) discloses a wireless communication system including a streaming device and two hearing devices L, R. Document (US 2012/058727 A1) discloses a wireless communication system for allowing a loud speaker to snoop a link between other devices. Document (US 2018/084456 A1) discloses a conventional wireless communication system comprising a source device, a primary audio output device, and a secondary audio output device. Document (EP 2 051 454 A1) discloses a conventional data communication method.

### Disclosure of Invention

### Technical Problem

A topology indicating a Bluetooth network environment may include one user device (e.g., a device under test (DUT)) for transmitting a data packet and a plurality of devices for receiving a data packet from the user device. For example, when earphones (or a headset) are connected to a smartphone, the earphone worn on the left ear of a user and the earphone worn on the right ear of the user may receive data packets from the smartphone.

Unless the plurality of devices (e.g., earphones) which receive data packets are connected to each other in a wired manner, each of the plurality of devices which receive the data packets may establish a separate link with the user device. In this case, because the user device (e.g., a smartphone) should generate a plurality of links to transmit a data packet, resource consumption and power consumption of the user device may occur and complexity may increase. Furthermore, when one device receives data, but the other device fails in receiving data, power consumption and resource usage of the user device may increase due to retransmission of data and network throughput may decrease.

Various embodiments disclosed in the disclosure may provide an electronic device and a method for transmitting data packets in a Bluetooth network environment.

### Solution to Problem

The present invention is defined by the appended set of claims.

In accordance with an aspect of the disclosure, a wireless communication system is provided as defined by the appended claims.

### Advantageous Effects of Invention

According to various embodiments disclosed in the disclosure, the electronic device may reduce resources and current consumed in a Bluetooth network environment, thus reducing a delay time for data processing.

In addition, various effects ascertained directly or indirectly through the disclosure may be provided.

### Brief Description of Drawings

FIG. 1 is a block diagram illustrating an electronic device in a network environment according to various embodiments.
FIG. 2 illustrates a topology indicating a Bluetooth network environment according to various embodiments.
FIG. 3 illustrates a user interface (UI) indicating a connection between devices in a Bluetooth network environment according to various embodiments.
FIG. 4 illustrates a signal sequence diagram for transmitting a data packet according to various embodiments.
FIG. 5 illustrates a graph indicating a time period for transmitting a data packet according to various embodiments.
FIG. 6 illustrates another graph indicating a time period for transmitting a data packet according to various embodiments.
FIG. 7 illustrates another graph indicating a time period for transmitting a data packet according to various embodiments;
FIG. 8 illustrates an operational flowchart of an electronic device for transmitting a data packet according to various embodiments.
FIG. 9 illustrates another operational flowchart of an electronic device for transmitting a data packet according to various embodiments.
FIG. 10 illustrates an operational flowchart of an electronic device for receiving a data packet according to various embodiments, and
FIG. 11 illustrates another operational flowchart of an electronic device for receiving a data packet according to various embodiments.

With regard to description of drawings, the same or similar denotations may be used for the same or similar components.

### Mode for the Invention

Hereinafter, various embodiments of the disclosure will be described with reference to accompanying drawings. However, it should be understood that this is not intended to limit the disclosure to specific implementation forms and includes various modifications, and/or alternatives of embodiments of the disclosure.

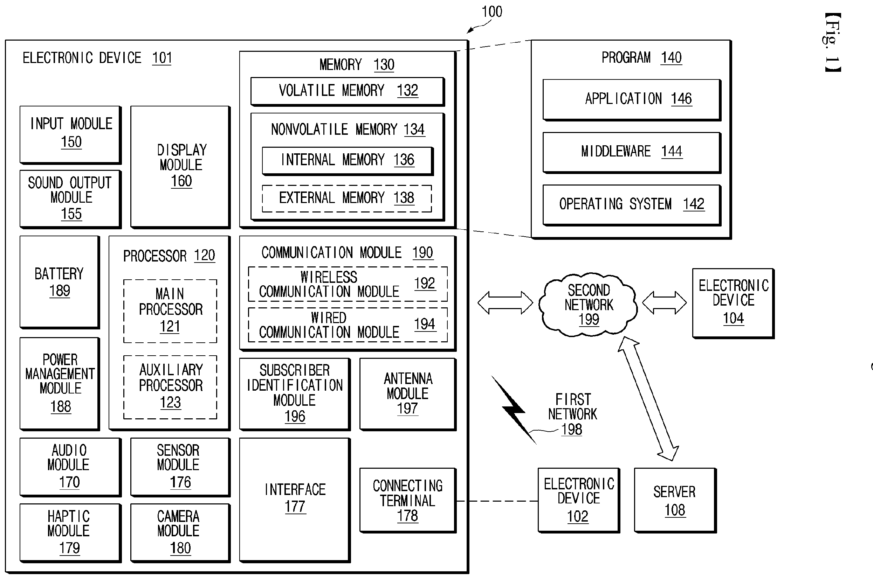

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102).

According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

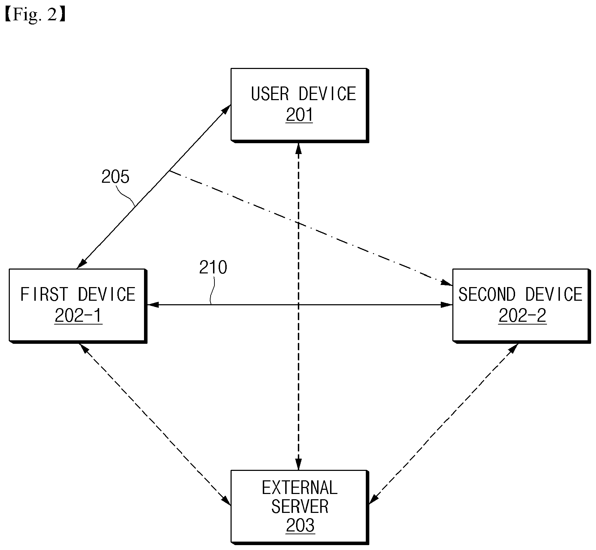

FIG. 2 illustrates a topology indicating a Bluetooth network environment according to various embodiments.

Referring to FIG. 2, a user device 201 and devices 202- 1 and 202- 2 included in a topology 200 may include components, at least some of which are the same as or similar to an electronic device 101 shown in FIG. 1 and may perform functions, at least some of which are the same as or similar to the electronic device 101. For example, the user device 201 and the devices 202-1 and 202-2 include wireless communication circuitry (e.g., at least a part of a wireless communication module 192 of FIG. 1) configured to support a Bluetooth protocol defined by the Bluetooth SIG. In this case, the wireless communication circuitry may include at least one of a Bluetooth module or a Bluetooth chip. The Bluetooth protocol may include, for example, a Bluetooth legacy protocol and a Bluetooth low energy (BLE) protocol. The wireless communication circuitry may support one or two of the Bluetooth legacy protocol or the BLE protocol.

The user device 201 includes an user equipment (UE), such as a smartphone, a tablet, a desktop computer, or a laptop computer, and the devices 202-1 and 202-2 may include an accessory device, such as earphones, a headset, a speaker, a mouse, a keyboard, or a display device. According to an embodiment, each of the devices 202-1 and 202-2 may previously recognize a counterpart device (e.g., the first device 202-1 or the second device 202-2) or may previously store information (e.g., address information) of the counterpart device. For example, when the first device 202-1 and the second device 202-2 are accessory devices (e.g., earphones) making up one set, they may previously recognize each other or may previously store mutual address information.

Electronic devices (e.g., the user device 201 and the devices 202- 1 and 202- 2), each of which supports the Bluetooth protocol, may align a timing of transmission or reception of packets on the basis of a clock. The clock based on the Bluetooth protocol may include a reference clock (CLKR), a native clock (CLKN), an estimated clock (CLKE), and a master clock (CLK). The CLKR may be a system clock generated from a system of the electronic device, which may become the criterion for other clocks. The CLKN may start from 0x0 with reference to the CLKR at a timing when the wireless communication circuitry (e.g., at least a part of the wireless communication module 192 of FIG. 1), which supports the Bluetooth protocol, is powered on. For example, the electronic device may operate the CLKN by applying a timebase-offset to the CLKR. The CLK may be used for synchronization between electronic devices. In this case, a channel resource (e.g., a frequency hopping channel) for transmitting packets may be generated based on a CLKN of a device which plays a master role. In a Bluetooth legacy network, a time resource (e.g., a time slot) may be determined based on a CLKN of a master device. The time slot may be, for example, 625 microseconds (us). A device which plays a slave role may be synchronized by applying an offset to the CLKN of the master device, and the CLKN of the master device may be a CLK.

The device which plays a master role may perform the overall control of a physical channel as well as being the criterion for determining the CLK. For example, the slave device should receive a packet from the master device to transmit the packet to the master device. In a BLE network, the master device and the slave device may transmit a data packet every specified interval and may respond after a specified time (e.g., the inter frame space (T_IFS), about 150 us), when a data packet is received. For another example, electronic devices may determine a frequency hopping channel based on a clock and a Bluetooth device address (BD) of the master device. According to an embodiment, the master role or the slave role may be determined in a procedure of generating a link (e.g., 205 or 210) between electronic devices (e.g., the user device 201 or the devices 202-1 and 202-2).

The electronic devices, each of which supports the Bluetooth protocol, may have a unique BD_ADDR. The BD_ADDR may be used in a media access control (MAC) layer. The BD_ADDR may include, for example, 48-bit information. The BD_ADDR may include a lower address part (LAP), an upper address part (UAP), and a non-significant part (NAP). The LAP may indicate a device address specified by a manufacturer, and the UAP and the NAP may indicate device addresses specified to the manufacturer by the institute of electrical and electronics engineers (IEEE). The BD_ADDR may be used for identifying an electronic device, determining a frequency hopping channel, authentication, or calculation for link operation.

Electronic devices, each of which supports the Bluetooth protocol, may insert different access codes into a packet on purposes. The access code may include, for example, a device access code (DAC), an inquiry access code (IAC), and a channel access code (CAC). The access code may be generated based on a BD_ADDR of a specific electronic device. The IAC may be used to discover peripheral external electronic devices. The IAC may include a general IAC (GIAC) and a dedicated IAC (DIAC). The GIAC may be generated based on the LAP having a fixed value (e.g., 0x9E8B33), and the DIAC may be generated based on the LAP having a value of a specified range (e.g., from 0x9E8B00 to 0x9E8B3F). The DAC may be used to request a connection. In this case, the DAC may be generated based on an LAP of an electronic device which receives a request for a connection. The CAC may be used for data communication in a state where two or more electronic devices are connected with each other (e.g., a state where a link (e.g., 205 or 210) is established). The CAC may be generated based on an LAP of the master device.

The user device 201 and the devices 202-1 and 202-2 are connected with a counterpart device based on the Bluetooth protocol to provide a user with various services. For example, when the user device 201 is a smartphone and when the first device 202-1 and the second device 202-2 are earphones making up a set, the user device 201 may provide at least one of a healthcare, a handsfree call, media playback, file sharing, or a notification function via the first device 202-1 and the second device 202-2. According to a type of content included in a data packet, at least one of the device 202- 1 or 202- 2 as well as the user device 201 may transmit the data packet. For example, when music is played by the user device 201, only the user device 201 may transmit a data packet, whereas, when the user device 201 makes a call, at least one of the device 202-1 or 202-1 as well as the user device 201 may transmit a data packet including content (e.g., voice data) to the user device 201. When only the user device 201 transmits the data packet, the user device 201 may be referred to as a source device and the devices 202-1 and 202-2 may be referred to as sink devices.

When the user device 201 creates or establishes a plurality of links with the plurality of devices 202-1 and 202-2 to transmit a data packet, because it is able to increase resources and power consumed by the user device 201, the user device 201 may configure only a first link 205 with the first device 202-1 and transmits a data packet over the first link 205. In this case, at least one other device (e.g., 202-2) monitors the first link 205 to receive a data packet including content transmitted from the user device 201. In this case, the user device 201 may be referred to as a device under test (DUT), the first device 202- 1 may be referred to as primary earbud or primary equipment (PE), and at least one other device (e.g., 202-2) may be referred to as secondary earbud or secondary equipment (SE).

According to an embodiment, the first electronic device 201 generates a second link 210 with the second device 202-2. The first device 202-1 transmits information associated with the first link 205 to the second device 202-2 over the second link 210, such that the second device 202-2 monitors the first link 205.

According to an embodiment, the first electronic device 202-1 first generates the second link 210 with the second device 202-2 and generates the first link 205 with the user device 201. The information associated with the first link 205 may include address information (e.g., BD_ADDR of a master device, the user device 201, and/or the first device 202-1 of the first link 205), piconet clock information (e.g., the CLKN of the master device of the first link 205), logical transport (LT) address information (e.g., information assigned by the master device of the first link 205), used channel map information, link key information, service discovery protocol (SDP) information (e.g., service and/or profile information associated with the first link 205), and/or supported feature information. The information associated with the first link 205 may further include, for example, an extended inquiry response (EIR) packet. The EIR packet may include resource control information of the first link 205 and/or information about a manufacturer. The second device 202-2 may determine a hopping channel (or a frequency hopping channel) of the first link 205 by means of address information and clock information, which are received from the first device 202-1, and may decrypt a data packet encrypted by means of link key information.

According to another embodiment, when the first device 202-1 and the second device 202-2 are devices supporting the same user account or similar user accounts (e.g., family accounts), they may share information associated with the first link 205 through an external device (e.g., an external server 203) interworking with the first device 202-1 or the second device 202-2 through the same or similar user account. In this case, the topology 200 may further include the external server 203. For example, the first device 202-1 may transmit the information associated with the first link 205 to the external server 203, and the external server 203 may transmit the information associated with the first link 205 to the second device 202-2.

The first device 202-1 transmits a response signal (or a response message) to the user device 201 to provide a notification that the data packet is normally received from the user device 201. The response signal includes a positive acknowledgement (ACK) signal indicating that the data packet is normally received and a negative acknowledgement (NACK) signal indicating that the data packet is not normally received. The response signal may include, for example, 1-bit information. When the ACK signal is received after transmitting the data packet, the user device 201 transmits a next data packet. When the NACK is received or when the response signal is not received within a specified time, the user device 201 may retransmit the same data packet.

The second device 202-2 which does not establish a link with the user device 201 as well as the first device 202-1 may also have a need to identify whether the data packet is normally received. According to various embodiments, the second device 202-2 transmits a response signal for the data packet to the first device 202-1. In this case, when the ACK signal is not received from the second device 202-2 (e.g., when the NACK signal is received or when the response signal is not received within the specified time), the first device 202-1 transmits the data packet, received from the user device 201, to the second device 202-2, thus providing the same effect as being retransmitted by the user device 201.

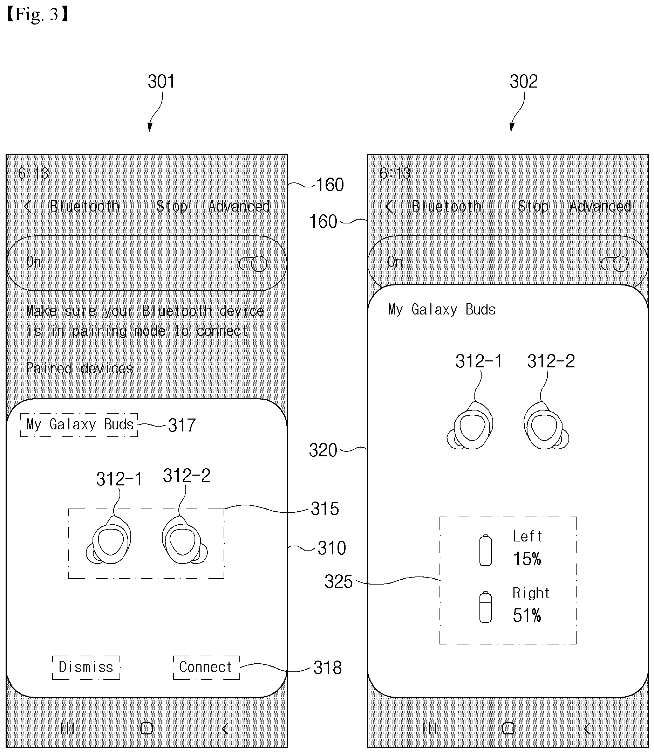

FIG. 3 illustrates a user interface (UI) indicating a connection between devices in a Bluetooth network environment according to various embodiments. FIG. 3 illustrates an embodiment where a plurality of external electronic devices 312-1 and 312-2 (e.g., devices 202-1 and 202-2 of FIG. 2) are composed of a set for an electronic device (e.g., a user device 201 of FIG. 2), but the same principle is also applicable to a user interface indicating only a connection between the electronic device and one external electronic device (e.g., the first device 202-1 of FIG. 2).

Referring to FIG. 3, in reference numeral 301, the electronic device may recognize the first external electronic device 312-1 by receiving an advertising signal transmitted from the first external electronic device 312-1 and may output a first user interface 310, for notifying a user of the recognized first external electronic device 312-1 and the second external electronic device 312-2 making up a set with the first external electronic device 312-1, on a display device 160 (e.g., a display).

The first user interface 310 may include at least one of, for example, an image 315 indicating shapes of the first external electronic device 312-1 and the second external electronic device 312-2 or a text 317 indicating a device name (e.g., "My Galaxy Buds") of the first external electronic device 312-1 and the second external electronic device 312-2. For another example, although not illustrated in FIG. 3, the first user interface 310 may indicate whether there is a history where the first external electronic device 312-1 or the second external electronic device 312-2 is previously connected.

According to an embodiment, the advertising signal may include information for a connection (or pairing) between the electronic device and the first external electronic device 312-1. For example, the advertising signal may include at least one of identification information of the first external electronic device 312-1, user account information, current pairing information indicating whether the first external electronic device 312-1 is pairing with another device, a pairing list indicating a list of devices with which the first external electronic device 312-1 is previously paired, simultaneous pairing information indicating a device capable of simultaneously pairing with the first external electronic device 312-1, a transmit power, a sensing region, or battery state information. For another example, when the first external electronic device 312-1 makes up a set with the second external electronic device 312-2, the advertising signal may further include at least one of identification information of the second external electronic device 312-2, user account information, current pairing information indicating whether the second external electronic device 312-2 is pairing with another device, a pairing list indicating a list of devices with which the second external electronic device 312-2 is previously paired, simultaneous pairing information indicating a device capable of simultaneously pairing with the second external electronic device 312-2, a transmit power, a sensing region, or battery state information.

According to an embodiment, the first external electronic device 312-1 may transmit an advertising signal in a multicast scheme or a broadcast scheme.

According to an embodiment, the first external electronic device 312-1 may transmit an advertising signal depending on a condition for performing advertising. For example, the first external electronic device 312-1 may transmit an advertising signal in response to detecting that cases stored in the first external electronic device 312-1 and the second external electronic device 312-2 are opened. For another example, the first external electronic device 312-1 may transmit an advertising signal in response to receiving power or receiving a user input. For another example, the first external electronic device 312-1 may transmit an advertising signal every specified period.

According to an embodiment, the electronic device may establish a first link (e.g., a link 205 of FIG. 2) with the first external electronic device 312-1 in response to receiving a user input 318 for requesting to connect with the first external electronic device 312-1 or automatically without a user input. According to an embodiment, the electronic device and the first external electronic device 312-1 establish a link depending on a procedure based on Bluetooth standards. For example, the electronic device and the first external electronic device 312-1 may perform a baseband page procedure for recognizing a counterpart device, a link manager protocol (LMP) procedure for identifying an LMP version, a clock offset, and a supported function (e.g., a supported feature), a host request/response procedure for identifying a connection, an authentication procedure for identifying whether the counterpart device is a reliable device, an encryption procedure, and a setup complete procedure for notifying a host that the connection (e.g., the establishment of the link) is completed.

When the link is established, as shown in reference numeral 302, the electronic device may output a second user interface 320, indicating that the first external electronic device 312-1 is connected with the electronic device, on the display device 160. The second user interface 320 may further include, for example, an image 325 indicating battery states of the first external electronic device 312-1 and the second external electronic device 312-2 making up a set with the first external electronic device 312-1.

Although not illustrated in FIG. 3, according to an embodiment, when the first external electronic device 312-1 is discovered in a state where the electronic device is previously connected with an external device except for the first external electronic device 312-1 and the second external electronic device 312-2, the electronic device may transmit information about a previously connected link to the first external electronic device 312-1 or the second external electronic device 312-2, such that the first external electronic device 312-1 or the second external electronic device 312-2 may monitor the link previously connected between the electronic device and the first external electronic device 312-1. In this case, the first user interface 310 may include information indicating that it is able to add the first external electronic 312-1 or the second external electronic device 312-2. When a user input for requesting to add the first external electronic device 312-1 or the second external electronic device 312-2 is received, the electronic device may transmit information about a previously connected link to the first external electronic device 312-1 or the second external electronic device 312-2.

FIG. 3 illustrates an embodiment of outputting a user interface depending on an advertising signal based on a BLE protocol, but, according to other embodiments, the electronic device may output a user interface based on a Bluetooth legacy protocol. For example, the electronic device may receive an FHS packet and an EIR packet from the first external electronic device 312-1 through an inquiry operation and may output the first user interface 310 based on information included in the FHS packet and the EIR packet. When a user input 318 for requesting the connection is received, the electronic device may establish a link with the first external electronic device 312-1 through a page operation.

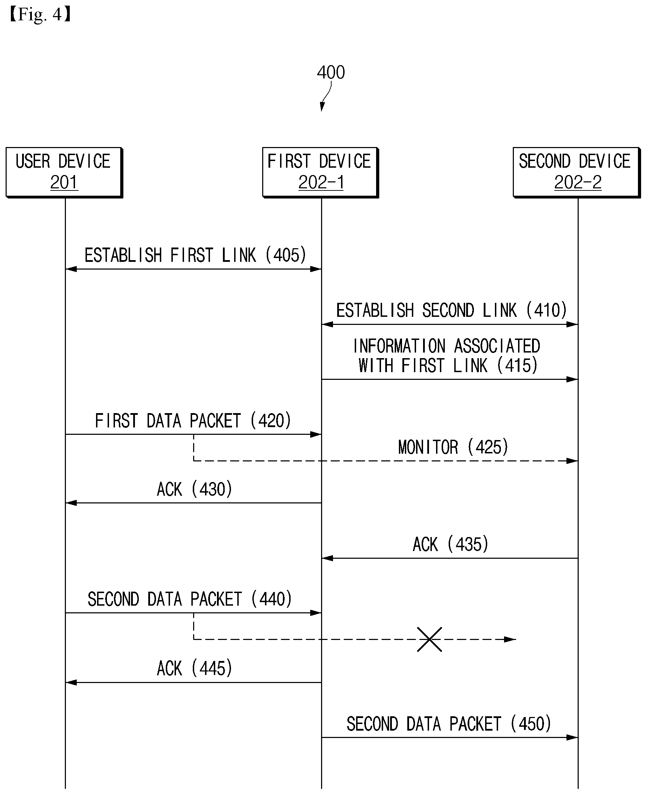

FIG. 4 illustrates a signal sequence diagram 400 for transmitting a data packet according to various embodiments.

Referring to FIG. 4, in operation 405, a first device 201-1 establishes a first link (e.g., a link 205 of FIG. 2) based on a Bluetooth protocol with a user device 201. In operation 410, the first device 202-1 establishes a second link (e.g., a second link 210 of FIG. 2) based on the Bluetooth protocol with a second device 202-2.

In operation 415, the first device 202-1 transmits information associated with the first link to the second device 202-2 over the second link such that the second device 202-2 monitors the first link. The information associated with the first link may include, for example, address information (e.g., address information of the first device 202-1 or the user device 201), piconet clock information, LT address information, used channel map information, link key information, SDP information, and/or supported feature information. Although not illustrated in FIG. 4, the first device 202-1 may previously transmit the information associated with the first link to an external server (e.g., an external server 203 of FIG. 2). The external server may be a server interworking with the first device 202-1 and the second device 202-2 by means of an application or a user account. In this case, the external server may transmit the information associated with the first link to the second device 202-2. For example, when there is a history where the first device 202-1 and the second device 202-2 are previously connected, the external server may transmit the information associated with the first link to the second device 202-2 before or after the second link is established.

In operation 420, the user device 201 transmits a first data packet including content to the first device 202-1 over the first link. In operation 425, the second device 202-2 monitors the first link using the information associated with the first link to receive the first data packet. The monitoring performed by the second device 202-2 may be referred to as sniffing or shadowing.

When the first data packet is normally received, the first device 202-1 and the second device 202-2 transmit an ACK signal. For example, in operation 430, the first device 202-1 transmits an ACK signal to the user device 201 and, in operation 435, the second device 202-2 may transmit an ACK signal to the first device 202-1. FIG. 4 illustrates only an embodiment of transmitting the ACK signal to the first device 202-1 after operation 430, but, according to other embodiments, the second device 202-2 may transmit the operation of transmitting the ACK signal at substantially the same time as operation 430 or before operation 430.

When the ACK signal is received, in operation 440, the user device 201 transmits a second data packet subsequent to the first data packet to the first device 202-1 over the first link. When the second data packet is normally received, in operation 445, the first device 202-1 may transmit an ACK signal to the user device 201.

According to various embodiments, although the first device 202-1 normally receives the second data packet, the second device 202-2 may fail to normally receive the second data packet. In this case, the second device 202-2 may transmit a NACK signal to the first device 202-1 or may fail to transmit a response signal.

When the NACK signal is received or the response signal is not received from the second device 202-2, in operation 450, the first device 202-1 may transmit the second data packet to the second device 202-2. For the first device 202-1 and the second device 202-2 to normally receive a third data packet subsequent to the second data packet from the user device 201, the first device 202-1 may transmit the second data packet to the second device 202-2 during a specified time period.

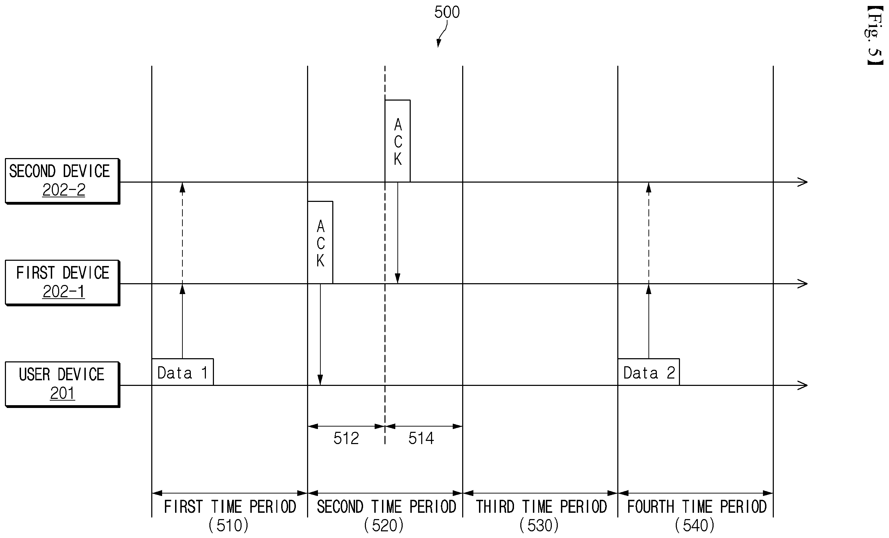

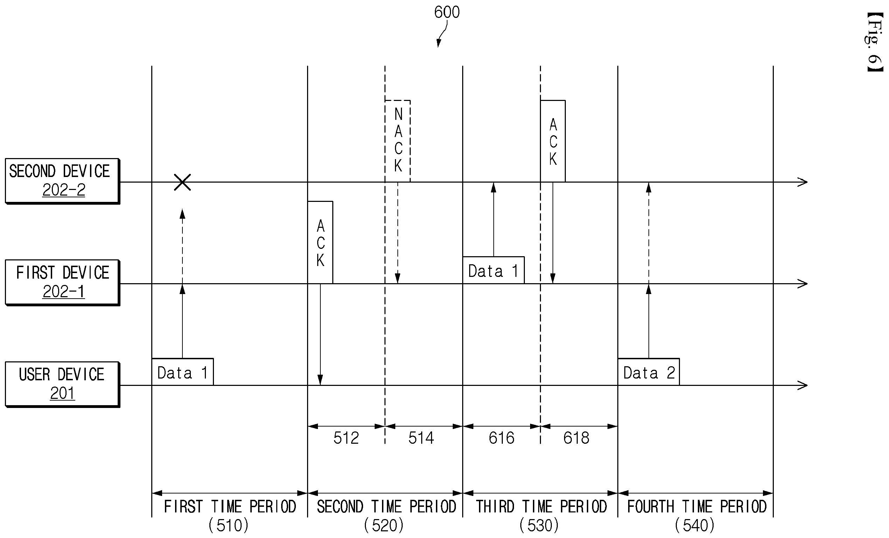

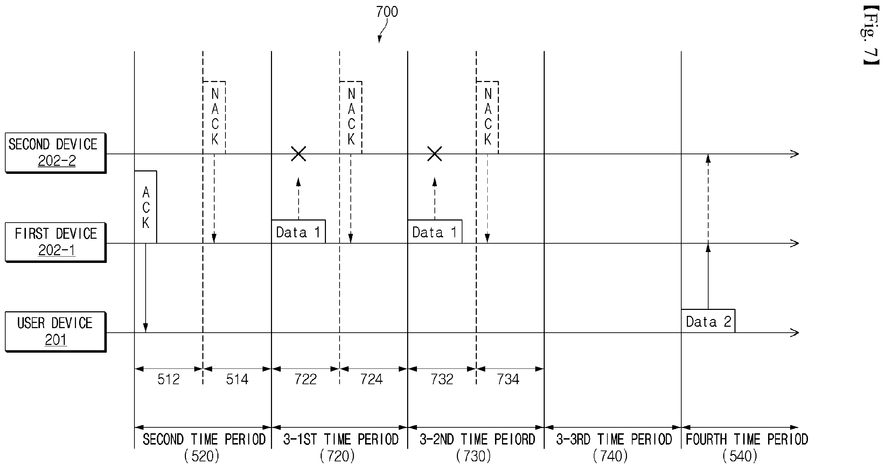

FIGS. 5 to 7 illustrate graphs indicating a time period for transmitting a data packet according to various embodiments. FIG. 5 illustrates a graph 500 indicating a time period when a data packet is normally received in a second device 202-2. FIG. 6 illustrates a graph 600 indicating a time period when a data packet is not normally received in a second device 202-2. FIG. 7 illustrates a graph 700 indicating a time period when a data packet is not normally received a plurality of times in a second device 202-2. The horizontal axis of each graph 500, 600 or 700 may indicate time.

Referring to FIG. 5, a user device 201 transmits a first data packet Data 1 to a first device 202-1 over a first link (e.g., a first link 205 of FIG. 2) during a first time period 510. The second device 202-2 monitors the first link to receive the first data packet. According to an embodiment, the first time period 510 is a reception (Rx) slot for the first device 202-1. For example, the first time period 510 may be time slot 1, 3, or 5 depending on quality of wireless communication.

When the first data packet is normally received, the first device 202-1 transmits an ACK signal to the user device 201 during a portion 512 of a second time period 520 subsequent to the first time period 510. According to an embodiment, the second time period 520 is a transmission (Tx) slot for the first device 202-1. For example, the second time period 520 may be time slot 1.

According to an embodiment, the second device 202-2 may transmit an ACK signal to the first device 202-1 over a second link (e.g., a second link 210 of FIG. 2) during the rest 514 of the second time period 320 in response to that the first data packet is normally received. Each of the time period 512 when the first device 202-1 transmits the ACK signal and the time period 514 when the second device 202-2 transmits the ACK signal is a half slot (e.g., 312.5 us). For another example, the second device 202-2 may transmit an ACK signal by means of at least one of a BLE scan signal based on BLE standards, an advertising signal, or a connection request signal. For another example, the second device 202-2 may transmit an ACK signal using a separate communication protocol (e.g., WiFi, IrDA, near field communication (NFC), or ultra wide band (UWB)) except for a Bluetooth protocol.

According to an embodiment, the first device 202-1 and the second device 202-2 may determine the time period 514 when the second device 202-2 transmits the ACK signal by means of negotiation. The negotiation may be performed, for example, while a second link is established or after the second link is established. The first device 202-1 may open a reception (Rx) window to receive an ACK signal from the second device 202-2 during the negotiated time period 514.

Although not illustrated in FIG. 5, according to an embodiment, the first device 202-1 may transmit a query signal for querying whether to receive a first data packet before receiving the ACK signal from the second device 202-2 to the second device 202-2. In this case, the second device 202-2 may transmit an ACK signal in response to receiving the query signal from the first device 202-1.

According to an embodiment, the user device 201, the first device 202-1, and the second device 202-2 may fail to transmit a data packet during a third time period 530 subsequent to the second time period 520. For example, a time period when the data packet (or signal) is not transmitted like the third time period 530 may be referred to as a radio idle time period in BLE standards. According to an embodiment, the third time period 530 may be determined as time slots 14 to 28 based on a bitrate of an audio source (e.g., the user device 201).

In response to receiving the ACK signal in the second time period 520, the user device 201 transmits a second data packet Data 2 subsequent to the first data packet to the first device 202-1 over the first link during a fourth time period 540. The second device 202-2 may receive the second data packet by monitoring the first link. The fourth time period 540 may be a reception slot for the first device 202-1. According to an embodiment, the length of the fourth time period 540 may be the same as or similar to the first time period 510.

Referring to FIG. 6, the second device 202-2 fails to normally receive the first data packet during the first time period 510. In this case, the second device 202-2 transmits a NACK signal to the first device 202-1 or may fail to transmit a response signal, during the rest 514 of the second time period 520.

When the ACK signal is not received from the second device 202-2 during the rest 514 of the second time period 520, the first device 202-1 transmits a first data packet to the second device 202-2 over a second link (e.g., a second link 210 of FIG. 2) during a portion 616 of the third time period 530. The second device 202-2 may attempt to receive a first data packet during the corresponding period 616. When the first data packet transmitted from the first device 202-1 is normally received, the second device 202-2 may transmit an ACK signal to the first device 202-1 during the rest 618 of the third time period 530. According to an embodiment, the first device 202-1 may deliver a data packet which fails to be received to the second device 202-2 using the third time period 530 when transmission of the data packet is not performed, thus preventing a resource between the first device 202-1 and the user device 201 from being wasted and simultaneously preventing Bluetooth performance of the second device 202-2 from being degraded.

Although not illustrated in FIG. 6, according to another embodiment, the first device 202-1 may transmit a query signal for querying whether to receive the first data packet before receiving the ACK signal from the second device 202-2 to the second device 202-2. In this case, when storing data (e.g., first data) received from the user device 201, the first device 202-1 may insert the stored data into the query signal to transmit the query signal to the second device 202-2. The second device 202-2 may transmit an ACK signal in response to receiving the query signal from the first device 202-1.

According to an embodiment, the first device 202-1 may store the first data packet received during the first time period 510 in a memory (e.g., a memory 130 of FIG. 1) to transmit the first data packet to the second device 202-2. The first device 202-1 may delete the first data packet from the memory in response to receiving the ACK signal from the second device 202-2.

Referring to FIG. 7, a 3-1st time period 720, a 3-2nd time period 730, and a 3-3rd time period 740 on a graph 700 are a portion of the third time period 530 of FIG. 6. FIG. 7 illustrates the three time periods 720, 730, and 740 included in the third time period 530, but the number of time periods included in the third time period and a length for each time period may vary.

According to various embodiments, when the ACK signal for the first data packet is not received from the second device 202-2 after the first device 202-1 retransmits the first data packet to the second device 202-2, the first device 202-1 may attempt to retransmit the first data packet a plurality of times. For example, when the first data packet transmitted during a portion 722 of the 3-1st time period 720 is not normally received in the second device 202-2, the second device 202-2 may transmit a NACK signal or may fail to transmit a response signal, during the rest of the 3-1st time period 720. When the NACK signal is received or when the response signal is not received, the first device 202-1 may retransmit the first data packet during a portion 732 of the 3-2nd time period 730 subsequent to the 3-1st time period 720 and the second device 202-2 may attempt to receive the first data packet again. When the retransmitted first data packet is not normally received, the second device 202-2 may transmit a NACK signal or may fail to transmit a response signal, during the rest 734 of the 3-2nd time period 730.

To prevent the waste of power and resources of the first device 202-1, which is caused because the retransmission of the first data packet is repeatedly performed, when the number of retransmissions of the first data reaches a threshold or when a specified time elapses, the first device 202-1 may not transmit the first data packet to the second device 202-2 any longer. For example, although the NACK signal is received or the response signal is not received from the second device 202-2 during the rest 734 of the 3-2nd time period 730, when the number of retransmissions of the first data packet reaches the threshold or when the specified time elapses, the first device 202-1 may fail to transmit the first data during the rest of third time period (e.g., the 3-3rd time period 740 subsequent to the 3-2nd time period 730). In this case, the first device 202-1 attempts to receive a second data packet Data 2, which is transmitted from the user device 201 over the first link and is subsequent to the first data packet, during a fourth time period 540 subsequent to the third time period. The second device 202-2 may attempt to receive the second data packet by monitoring the first link.

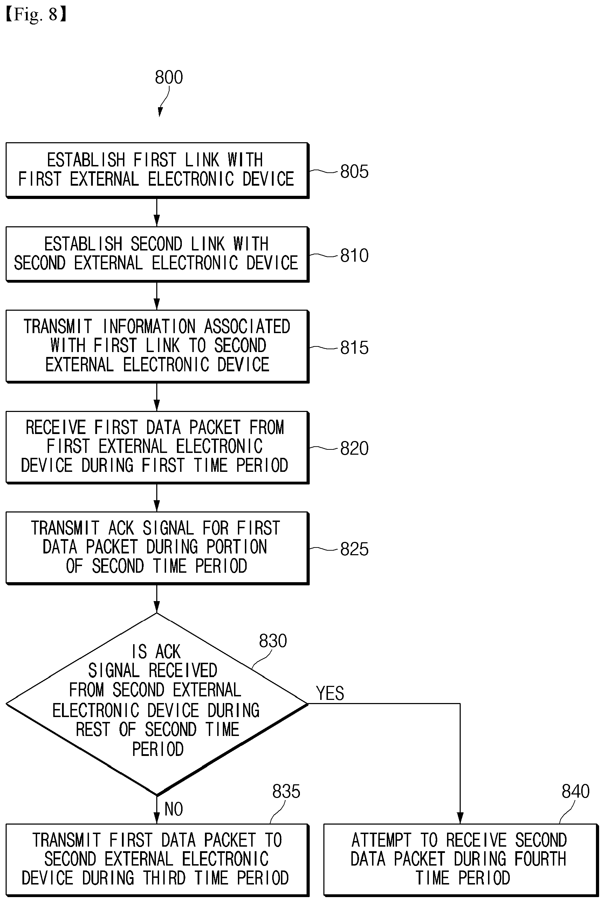

FIG. 8 illustrates an operational flowchart 800 of an electronic device (e.g., a first device 202-1 of FIG. 2) for transmitting a data packet according to various embodiments. Operations of the operational flowchart described below may be performed by an electronic device or a component (e.g., a processor 120 or a wireless communication module 192 of FIG. 1) of the electronic device.

Referring to FIG. 8, in operation 805, the electronic device establishes a first link (e.g., a first link 205 of FIG. 2) based on a Bluetooth protocol with a first external electronic device (e.g., a user device 201 of FIG. 2).

In operation 810, the electronic device establishes a second link (e.g., a second link 210 of FIG. 2) based on the Bluetooth protocol with a second external electronic device (e.g., a second device 202-2 of FIG. 2).

In operation 815, the electronic device transmits information associated with the first link to the second external electronic device such that the second external electronic device monitors the first link.

In operation 820, the electronic device receives a first data packet from the first external electronic device during a first time period (e.g., a first time period 510 of FIG. 6).

In operation 825, the electronic device transmits an ACK signal for the first data packet to the first external electronic device during a portion (e.g., a time period 512 of FIG. 6) of a second time period (e.g., a second time period 520 of FIG. 6) subsequent to the first time period.

In operation 830, the electronic device identifies whether the ACK signal is received from the second external electronic device during the rest (e.g., a time period 514 of FIG. 6) of the second time period. According to an embodiment, each of the portion and the rest of the second time period is a half slot.

When the ACK signal is not received from the second external electronic device (`NO' of operation 830), in operation 835, the electronic device transmits the first data packet to the second external electronic device during a third time period (e.g., a time period 616 of FIG. 6) subsequent to the second time period.

When the ACK signal is received from the second external electronic device (`YES' of operation 830), in operation 840, the electronic device attempts to receive a second data packet transmitted from the first external electronic device during a fourth time period (e.g., a fourth time period 540 of FIG. 6) subsequent to the third time period. The second data packet may be a data packet subsequent to the first data packet.

Although not illustrated in FIG. 8, according to other embodiments, the electronic device may fail to normally receive the first data packet from the first external electronic device. In this case, the electronic device may fail to transmit the ACK signal or may transmit a NACK signal to the first external electronic device over the first link during a portion of the second time period and may transmit the NACK signal to the second external electronic device over the second link during a portion of the second time period. The electronic device may attempt to receive the first data packet retransmitted from the first external electronic device during the third time period.

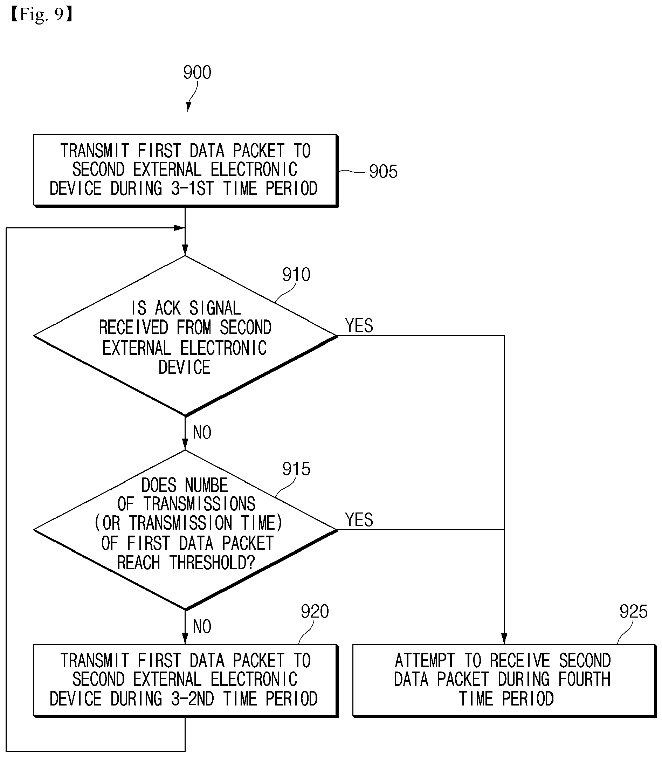

FIG. 9 illustrates another operational flowchart 900 of an electronic device (e.g., a first device 202-1 of FIG. 2) for transmitting a data packet according to various embodiments. According to an embodiment, operations shown in FIG. 9 may be an embodiment of operation 835 of FIG. 8.

Referring to FIG. 9, in operation 905, the electronic device transmits a first data packet to a second external electronic device (e.g., a second device 202-2 of FIG. 2) during a 3-1st time period (e.g., a 3-1st time period 720 of FIG. 7) which is a portion of a third time period (e.g., a third time period 530 of FIG. 6) (e.g., operation 835 of FIG. 8).

In operation 910, the electronic device may identify whether an ACK signal for the first data packet is received from the second external electronic device.

When the ACK signal is received (`YES' of operation 910), in operation 925, the electronic device attempts to receive a second data packet transmitted from a first external electronic device during a fourth time period (e.g., a fourth time period 540 of FIG. 7).

When the ACK signal is not received (`NO' of operation 910), in operation 915, the electronic device may identify whether the number of transmissions of the first data packet or a transmission time of the first data packet reaches a threshold.

When the number of transmissions or the transmission time reaches the threshold (`YES' of operation 915), in operation 925, the electronic device attempts to receive the second data packet transmitted from the first external electronic device during the fourth time period.

When the number of transmissions or the transmission time does not reach the threshold (`NO' of operation 915), in operation 920, the electronic device may retransmit the first data packet to the second external electronic device during a 3-2nd time period (e.g., a 3-2nd time period 730 of FIG. 7) subsequent to the 3-1st time period. Thereafter, the electronic device may repeatedly perform operations 910 to 925.

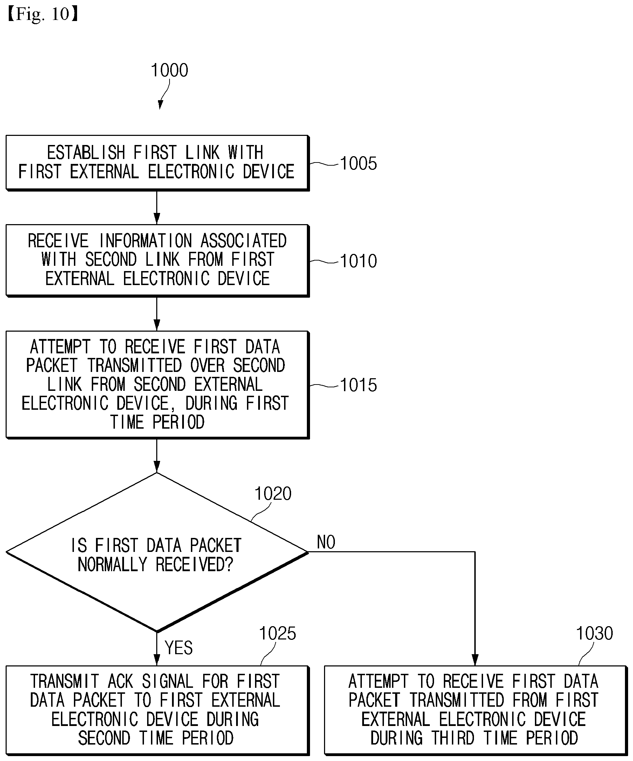

FIG. 10 illustrates an operational flowchart 1000 of an electronic device (e.g., a second device 202-2 of FIG. 2) for receiving a data packet according to various embodiments.

Referring to FIG. 10, in operation 1005, the electronic device establishes a first link (e.g., a second link 210 of FIG. 2) based on a Bluetooth protocol with a first external electronic device (e.g., a first device 202-1 of FIG. 2).

In operation 1010, the electronic device receives information associated with a second link (e.g., a first link 205 of FIG. 2) from the first external electronic device. The second link may refer to a link established based on the Bluetooth protocol between the first external electronic device and a second external electronic device (e.g., a user device 201 of FIG. 2). According to an embodiment, the second link may already be established before the first link is established or may be established after the first link is established. When the second link is established after the first link is established, the electronic device may synchronize a parameter required to establish the second link with the first external electronic device.

In operation 1015, the electronic device attempts to receive a first data packet transmitted over the second link from the second external electronic device during a first time period (e.g., a first time period 510 of FIG. 6), based on the information associated with the second link.

In operation 1020, the electronic device identifies whether the first data packet is normally received. When the first data packet is normally received (`YES' of operation 1020), in operation 1025, the electronic device may transmit an ACK signal for the first data packet to the first external electronic device during a second time period (e.g., a time period 514 of FIG. 6) subsequent to the first time period. When the first data packet is not normally received (`NO' of operation 1020), the electronic device may not transmit a response signal. In operation 1030, the electronic device attempts to receive the first data packet transmitted from the first external electronic device during a third time period (e.g., a third time period 530 or a time period 616 of FIG. 6) subsequent to the second time period. According to another embodiment, the electronic device transmits a NACK signal for the first data packet to the first external electronic device over the first link prior to operation 1030. For example, the electronic device transmits the NACK signal to the first external electronic device during the second time period.

Although not illustrated in FIG. 10, according to other embodiments, the electronic device may receive the NACK signal from the first external electronic device over the first link during a time period (e.g., a time period 512 of FIG. 6) between the first time period and the second time period. That the NACK is received from the first external electronic device may mean that the first external electronic device does not normally receive the first data packet from the second external electronic device. In response to receiving the NACK signal from the first external electronic device, when normally receiving the first data packet in operation 1020, the electronic device may attempt to receive the first data packet retransmitted over the second link from the second external electronic device during the third time period or may fail to attempt to receive the data packet. In response to receiving the NACK signal from the first external electronic device, when not normally receiving the first data packet in operation 1020, the electronic device may monitor the second link during the third time period to attempt to receive the first data packet retransmitted from the second external electronic device.

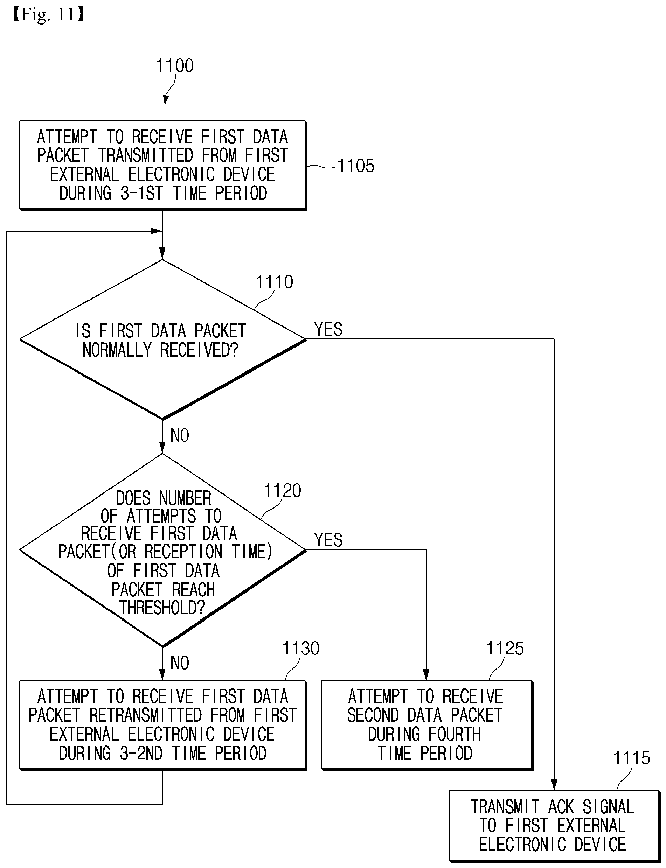

FIG. 11 illustrates another operational flowchart 1100 of an electronic device (e.g., a second device 202-2 of FIG. 2) for receiving a data packet according to various embodiments. Operations shown in FIG. 11 may be an embodiment of operation 1030 of FIG. 10.

Referring to FIG. 11, in operation 1105, the electronic device attempts to receive a first data packet transmitted from a first external electronic device during a 3-1st time period (e.g., a 3-1st time period 720 of FIG. 7) included in a third time period.

In operation 1110, the electronic device may identify whether the first data packet is normally received. When the first data packet is normally received (`YES' of operation 1110), in operation 1115, the electronic device may transmit an ACK signal to the first external electronic device. When the ACK signal is not normally received (`NO' of operation 1110), in operation 1120, the electronic device may identify whether the number of attempts to receive the first data packet or a reception time of the first data packet reaches a threshold.

When the number of attempts to receive the first data packet or the reception time reaches the threshold (`YES' of operation 1120), in operation 1125, the electronic device attempts to receive a second data packet during a fourth time period (e.g., a fourth time period 540 of FIG. 7) subsequent to the third time period. When the number of attempts to receive the first data packet or the reception time does not reach the threshold (`NO' of operation 1120), in operation 1130, the electronic device may attempt to receive the first data packet retransmitted from the first external electronic device during a 3-2nd time period (e.g., a 3-2nd time period 740 of FIG. 7) subsequent to the 3-1st time period. The electronic device may repeatedly perform operations 1110 to 1130.

As described above, an electronic device (e.g., a first device 202-1 of FIG. 4) according to various embodiments may include wireless communication circuitry (e.g., at least a part of a wireless communication module 192 of FIG. 1) configured to support a Bluetooth protocol. The wireless communication circuitry is configured to establish a first link with a first external electronic device (e.g., a user device 201 of FIG. 4), establish a second link with a second external electronic device (e.g., a second device 202-2 of FIG. 4), transmit information required for the second external electronic device to monitor a data packet transmitted over the first link to the second external electronic device, receive a first data packet from the first external electronic device over the first link during a first time period (e.g., a first time period 510 of FIG. 6), transmit a response signal for the first data packet to the first external electronic device over the first link during a portion (e.g., 512 of FIG. 6) of a second time period subsequent to the first time period, attempt to receive an acknowledgement (ACK) signal, indicating that the second external electronic device normally receives the first data packet, from the second external electronic device over the second link during the rest (e.g., 514 of FIG. 6) of the second time period, and transmit the first data packet to the second external electronic device over the second link during a third time period (e.g., a third time period 530 of FIG. 6) subsequent to the second time period, when the ACK signal is not received, or attempt to receive a second data packet subsequent to the first data packet from the first external electronic device during a fourth time period (e.g., a fourth time period 540 of FIG. 6) subsequent to the third time period, when the ACK signal is received.

According to an embodiment, the wireless communication circuitry is configured to transmit the first data packet to the second external electronic device over the second link, when a negative ACK (NACK) signal is received from the second external electronic device.

According to an embodiment, the wireless communication circuitry may be configured to transmit a signal for querying about transmission of the ACK signal to the second external electronic device, prior to attempting to receive the ACK signal.

According to an embodiment, the first time period and the fourth time period correspond to reception periods of the electronic device, the second time period corresponds to a transmission (Tx) period of the electronic device, and the third time period may correspond to an idle period of the electronic device.

According to an embodiment, the first time period and the fourth time period may correspond to time slot 1, time slot 3, or time slot 5, the second time period may correspond to time slot 1, and the third time period may correspond to a length of one of time slots 14 to 28.

According to an embodiment, the portion of the second time period and the rest of the second time period correspond to half slots.

According to an embodiment, a length of the third time period may be determined according to a bitrate of the first external electronic device.

According to an embodiment, the wireless communication circuitry is configured to identify whether the number of transmissions of the first data packet to the second external electronic device or a transmission time of the first data packet reaches a threshold, when the ACK signal is not received from the second external electronic device and retransmit the first data packet, when the number of transmissions or the transmission time does not reach the threshold, or attempt to receive the second data packet during the fourth time period, when the number of transmissions or the transmission time reaches the threshold.

As described above, an electronic device (e.g., a second device 202-2 of FIG. 4) according to various embodiments may include wireless communication circuitry (e.g., at least a part of a wireless communication module 192 of FIG. 1) configured to support a Bluetooth protocol. The wireless communication circuitry is configured to establish a first link with a first external electronic device (e.g., a first device 202-1 of FIG. 4), receive information about a second link between the first external electronic device and a second external electronic device (e.g., a user device 201 of FIG. 4) over the first link, attempt to receive a first data packet transmitted over the second link from the second external electronic device, during a first time period (e.g., a first time period 510 of FIG. 6) based on the information about the second link, and transmit an ACK signal to the first external electronic device over the first link during a second time period (e.g., 514 of FIG. 6) subsequent to the first time period, when the first data packet is normally received, or attempt to receive a first data packet transmitted from the first external electronic device over the first link, during a third time period (e.g., a third time period 530 of FIG. 6) subsequent to the second time period, when the first data is not normally received.

According to an embodiment, the wireless communication circuitry is configured to transmit a NACK signal during the second time period, when the first data packet is not normally received.

According to an embodiment, the wireless communication circuitry may be configured to receive a signal for querying whether the first data packet is normally received, from the first external electronic device during the second time period.

According to an embodiment, the wireless communication circuitry is configured to attempt to receive a second data packet subsequent to the first data packet during a fourth time period (e.g., a fourth time period 540 of FIG. 6) subsequent to the third time period, when the first data packet is normally received.

According to an embodiment, the first time period and the fourth time period may correspond to time slot 1, time slot 3, or time slot 5, the second time period may correspond to time slot 1, and the third time period may correspond to a length of one of time slots 14 to 28.

According to an embodiment, the wireless communication circuitry may be configured to transmit the ACK signal during a second half slot after a first half slot in the second time period, when the first data packet is normally received.

According to an embodiment, a length of the third time period may be determined according to a bitrate of the second external electronic device.

As described above, a method of an electronic device (e.g., a first device 202-1 of FIG. 4) according to various embodiments includes establishing a first link with a first external electronic device (e.g., a user device 201 of FIG. 4), establishing a second link with a second external electronic device (e.g., a second device 202-2 of FIG. 4), transmitting information required for the second external electronic device to receive a data packet transmitted over the first link to the second external electronic device, receiving a first data packet from the first external electronic device over the first link during a first time period (e.g., a first time period 510 of FIG. 6), transmitting a response signal for the first data packet to the first external electronic device over the first link during a portion (e.g., 512 of FIG. 6) of a second time period subsequent to the first time period, attempting to receive an ACK signal, indicating that the second external electronic device normally receives the first data packet, from the second external electronic device over the second link during the rest (e.g., 514 of FIG. 6) of the second time period, and transmitting the first data packet to the second external electronic device over the second link during a third time period (e.g., a third time period 530 of FIG. 6) subsequent to the second time period, when the ACK signal is not received, or attempting to receive a second data packet subsequent to the first data packet from the first external electronic device during a fourth time period (e.g., a fourth time period 540 of FIG. 6) subsequent to the third time period, when the ACK signal is received.

According to an embodiment, the transmitting of the first data packet includes transmitting the first data packet to the second external electronic device over the second link, when a NACK signal is received from the second external electronic device during the rest of the second time period.

According to an embodiment, the method may further include transmitting a signal for querying about transmission of the ACK signal to the second external electronic device, prior to attempting to receive the ACK signal.

According to an embodiment, the first time period and the fourth time period may correspond to time slot 1, time slot 3, or time slot 5, the second time period may correspond to time slot 1, the portion of the second time period and the rest of the second time period correspond to half slots, and the third time period may correspond to a length of one of time slots 14 to 28.

According to an embodiment, the method further includes identifying whether the number of transmissions of the first data packet to the second external electronic device or a transmission time of the first data packet reaches a threshold, when the ACK signal is not received from the second external electronic device, retransmitting the first data packet, when the number of transmissions or the transmission time does not reach the threshold, and attempting to receive the second data packet during the fourth time period, when the number of transmissions or the transmission time reaches the threshold.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wireless communication system comprising:
a user equipment (201);
a first device (202-1); and
a second device (202-2),
wherein the first device (202-1) is configured to:
establish a first link (205) with the user equipment (201) based on Bluetooth protocol;
establish a second link (210) with the second device (202-2);
transmit, to the second device (202-2), information required for the second device (202-2) to monitor a data packet transmitted over the first link (205);
receive a first data packet from the user equipment (201) over the first link (205) during a first time period (510), the first time period corresponding to a reception time slot for the first device (202-1); and
transmit an acknowledgement, ACK, signal for the first data packet to the user equipment (201) over the first link (205) during a first half time slot (512) of a second time period (520) subsequent to the first time period (510), the second time period (520) corresponding to a transmission time slot for the first device (202-1),
wherein the user equipment (201) is configured to transmit regardless of the reception of the first data packet at the second device (202-2) and when the ACK signal for the first data packet is received from the first device (202-1), a second data packet subsequent to the first data packet over the first link (205) during a fourth time period (540) subsequent to a third time period (530),
wherein the second device (202-2), when failed to receive the first data packet by monitoring the first link (205), is configured to transmit, over the second link (210), negative ACK, NACK, signal for the first data packet to the first device (202-1) during a second half time slot (514) of the second time period (520), and
the first device (202-1) is further configured to:
attempt to receive an ACK signal, indicating that the second device (202-2) successfully receives the first data packet, from the second device (202-2) over the second link (210) during the second half time slot (514) of the second time period (514), and
transmit the first data packet to the second device (202-2) over the second link (210) during the third time period (530) subsequent to the second time period (520), when an ACK signal from the second device (202-2) is not received during the second half time slot (514) or when the NACK signal is received from the second device (202-2).

2. The wireless communication system of claim 1, wherein the fourth time period (540) correspond to reception periods of the first device (202-1), and
wherein the third time period (530) corresponds to an idle period of the first device (202-1).

3. The wireless communication system of claim 1, wherein a length of the third time period (530) is determined according to a bitrate of the user equipment (201).

4. The wireless communication system of claim 1, wherein the first device (202-1) is configured to:
identify whether the number of transmissions of the first data packet to the second device (202-2) or a transmission time of the first data packet reaches a threshold, when the ACK signal is not received from the second device (202-2); and
retransmit the first data packet, when the number of transmissions or the transmission time does not reach the threshold, or
attempt to receive the second data packet during the fourth time period (540), when the number of transmissions or the transmission time reaches the threshold.

5. The wireless communication system of claim 1, wherein the second device (202-2) is further configured to:
establish the second link (210) with the first device (202-1);
receive the information about the first link (205) over the second link (210); and
attempt to receive the first data packet transmitted over the first link (205) from the user equipment (201) to the first device (202-1), during the first time period (510) based on the information about the first link (205).

## Patentansprüche

1. Drahtloses Kommunikationssystem, das Folgendes umfasst:
ein Benutzergerät (201);
eine erste Vorrichtung (202-1); und
eine zweite Vorrichtung (202-2),
wobei die erste Vorrichtung (202-1) konfiguriert ist zum:
Herstellen einer ersten Verbindung (205) mit dem Benutzergerät (201) auf der Grundlage eines Bluetooth-Protokolls;
Herstellen einer zweiten Verbindung (210) mit der zweiten Vorrichtung (202-2);
Übertragen von Informationen an die zweite Vorrichtung (202-2), die erforderlich sind, damit die zweite Vorrichtung (202-2) ein über die erste Verbindung (205) übertragenes Datenpaket überwachen kann;
Empfangen eines ersten Datenpakets von dem Benutzergerät (201) über die erste Verbindung (205) während einer ersten Zeitperiode (510), wobei die erste Zeitperiode einem Empfangszeitschlitz für die erste Vorrichtung (202-1) entspricht; und
Übertragen eines Bestätigungs-, ACK,-Signals, für das erste Datenpaket an die Benutzervorrichtung (201) über die erste Verbindung (205) während eines ersten halben Zeitschlitzes (512) einer zweiten Zeitperiode (520), die auf die erste Zeitperiode (510) folgt, wobei die zweite Zeitperiode (520) einem Sendezeitschlitz für die erste Vorrichtung (202-1) entspricht,
wobei das Benutzergerät (201) konfiguriert ist, um
unabhängig vom Empfang des ersten Datenpakets an der zweiten Vorrichtung (202-2) und wenn das ACK-Signal für das erste Datenpaket von der ersten Vorrichtung (202-1) empfangen wird, ein zweites Datenpaket im Anschluss an das erste Datenpaket über die erste Verbindung (205) während einer vierten Zeitperiode (540) im Anschluss an eine dritte Zeitperiode (530) zu übertragen,
wobei die zweite Vorrichtung (202-2), wenn der Empfang des ersten Datenpakets durch Überwachung der ersten Verbindung (205) fehlschlägt, konfiguriert ist, um
Übertragen, über die zweite Verbindung (210), eines negativen ACK-, NACK,-Signals für das erste Datenpaket an die erste Vorrichtung (202-1) während eines zweiten halben Zeitschlitzes (514) der zweiten Zeitperiode (520), und
die erste Vorrichtung (202-1) ferner konfiguriert ist zum:
Versuchen, ein ACK-Signal, das anzeigt, dass die zweite Vorrichtung (202-2) das erste Datenpaket erfolgreich empfängt, von der zweiten Vorrichtung (202-2) über die zweite Verbindung (210) während des zweiten halben Zeitschlitzes (514) der zweiten Zeitperiode (514) zu empfangen, und
Übertragen des ersten Datenpakets an die zweite Vorrichtung (202-2) über die zweite Verbindung (210) während der dritten Zeitperiode (530) nach der zweiten Zeitperiode (520), wenn ein ACK-Signal von der zweiten Vorrichtung (202-2) während des zweiten halben Zeitschlitzes (514) nicht empfangen wird oder wenn das NACK-Signal von der zweiten Vorrichtung (202-2) empfangen wird.

2. Drahtloses Kommunikationssystem nach Anspruch 1, wobei die vierte Zeitperiode (540) den Empfangsperioden der ersten Vorrichtung (202-1) entspricht, und
wobei die dritte Zeitperiode (530) einer Ruheperiode der ersten Vorrichtung (202-1) entspricht.

3. Drahtloses Kommunikationssystem nach Anspruch 1, wobei eine Länge der dritten Zeitperiode (530) entsprechend einer Bitrate des Benutzergeräts (201) bestimmt wird.

4. Drahtloses Kommunikationssystem nach Anspruch 1, wobei die erste Vorrichtung (202-1) konfiguriert ist zum:
Identifizieren, ob die Anzahl der Übertragungen des ersten Datenpakets an die zweite Vorrichtung (202-2) oder eine Übertragungszeit des ersten Datenpakets einen Schwellenwert erreicht, wenn das ACK-Signal nicht von der zweiten Vorrichtung (202-2) empfangen wird; und
erneutes Übertragen des ersten Datenpakets, wenn die Anzahl der Übertragungen oder die Übertragungszeit den Schwellenwert nicht erreicht, oder
Versuchen, das zweite Datenpaket während der vierten Zeitperiode (540) zu empfangen, wenn die Anzahl der Übertragungen oder die Übertragungszeit den Schwellenwert erreicht.

5. Drahtloses Kommunikationssystem nach Anspruch 1, wobei die zweite Vorrichtung (202-2) weiterhin konfiguriert ist, um:
die zweite Verbindung (210) mit der ersten Vorrichtung (202-1) herzustellen;
die Informationen über die erste Verbindung (205) über die zweite Verbindung (210) zu empfangen; und
zu versuchen, das erste Datenpaket, das über die erste Verbindung (205) vom Benutzergerät (201) an die erste Vorrichtung (202-1) übertragen wird, während der ersten Zeitperiode (510) basierend auf den Informationen über die erste Verbindung (205) zu empfangen.

## Revendications

1. Système de communication sans fil comprenant :
un équipement utilisateur (201) ;
un premier dispositif (202-1) ; et
un deuxième dispositif (202-2),
dans lequel le premier dispositif (202-1) est configuré pour :
établir une première liaison (205) avec l'équipement utilisateur (201) sur la base du protocole Bluetooth ;
établir une deuxième liaison (210) avec le deuxième dispositif (202-2) ;
transmettre, au deuxième dispositif (202-2), des informations nécessaires au deuxième dispositif (202-2) pour surveiller un paquet de données transmis sur la première liaison (205) ;
recevoir un premier paquet de données depuis l'équipement utilisateur (201) sur la première liaison (205) pendant une première période de temps (510), la première période de temps correspondant à un créneau de réception temporel pour le premier dispositif (202-1) ; et
transmettre un signal d'accusé de réception, ACK, pour le premier paquet de données à l'équipement utilisateur (201) sur la première liaison (205) pendant un premier demi créneau temporel (512) d'une deuxième période de temps (520) postérieure à la première période de temps (510), la deuxième période de temps (520) correspondant à un créneau de transmission temporel pour le premier dispositif (202-1), l'équipement utilisateur (201) étant configuré pour
transmettre, indépendamment de la réception du premier paquet de données au deuxième dispositif (202-2) et lorsque le signal ACK pour le premier paquet de données est reçu depuis le premier dispositif (202-1), un deuxième paquet de données postérieur au premier paquet de données sur la première liaison (205) pendant une quatrième période de temps (540) postérieure à une troisième période de temps (530),
dans lequel le deuxième dispositif (202-2), lorsqu'il n'a pas réussi à recevoir le premier paquet de données en surveillant la première liaison (205), est configuré pour
transmettre, sur la deuxième liaison (210), un signal ACK négatif, NACK, pour le premier paquet de données au premier dispositif (202-1) au cours d'un deuxième demi créneau temporel (514) de la deuxième période de temps (520), et
le premier dispositif (202-1) étant en outre configuré pour :
tenter de recevoir un signal ACK, indiquant que le deuxième dispositif (202-2) a reçu avec succès le premier paquet de données, en provenance du deuxième dispositif (202-2) sur la deuxième liaison (210) pendant le deuxième demi créneau temporel (514) de la deuxième période de temps (514), et
transmettre le premier paquet de données au deuxième dispositif (202-2) sur la deuxième liaison (210) pendant la troisième période de temps (530) suivant la deuxième période de temps (520), lorsqu'un signal ACK du deuxième dispositif (202-2) n'est pas reçu pendant le deuxième demi créneau temporel (514) ou lorsque le signal NACK est reçu depuis le deuxième dispositif (202-2).

2. Système de communication sans fil de la revendication 1, dans lequel la quatrième période de temps (540) correspond à des périodes de réception du premier dispositif (202-1), et
dans lequel la troisième période de temps (530) correspond à une période d'inactivité du premier dispositif (202-1).

3. Système de communication sans fil de la revendication 1, dans lequel une longueur de la troisième période de temps (530) est déterminée en fonction d'un débit binaire de l'équipement utilisateur (201).

4. Système de communication sans fil de la revendication 1, dans lequel le premier dispositif (202-1) est configuré pour :
déterminer si le nombre de transmissions du premier paquet de données vers le deuxième dispositif (202-2) ou une durée de transmission du premier paquet de données atteint un seuil, lorsque le signal ACK n'est pas reçu depuis le deuxième dispositif (202-2) ; et
retransmettre le premier paquet de données lorsque le nombre de transmissions ou la durée de transmission n'atteint pas le seuil, ou
tenter de recevoir le deuxième paquet de données au cours de la quatrième période de temps (540), lorsque le nombre de transmissions ou la durée de transmission atteint le seuil.

5. Système de communication sans fil de la revendication 1, dans lequel le deuxième dispositif (202-2) est en outre configuré pour :
établir la deuxième liaison (210) avec le premier dispositif (202-1) ;
recevoir les informations relatives à la première liaison (205) sur la deuxième liaison (210) ; et
tenter de recevoir le premier paquet de données transmis sur la première liaison (205) de l'équipement utilisateur (201) au premier dispositif (202-1), pendant la première période de temps (510), sur la base des informations relatives à la première liaison (205).
